# EUROPÄISCHE PATENTANMELDUNG

(11) **EP 4 431 627 A1**
(43) Veröffentlichungstag der Anmeldung: **18.09.2024**
(21) Anmeldenummer: 24153232.4
(22) Anmeldetag: 22.01.2024
(51) Int. Cl.: C22C 19/05, F01D 11/00, F16J 15/3288

(54) **BÜRSTENDICHTUNG FÜR EINE TURBOMASCHINE**

(30) Priorität: 25.01.2023 DE 102023101856
(71) Anmelder: MTU Aero Engines AG, 80995 München (DE)
(72) Erfinder: Göttler, Johann, 80995 München (DE); Beichl, Stefan, 80995 München (DE); Mandard, Romain, 80995 München (DE)

(57) **Zusammenfassung**

Die Erfindung betrifft Bürstendichtung für eine Turbomaschine, die oberhalb einer Einsatztemperatur von 700 °C einer verbesserte Dichtwirkung aufweist. Die Bürstendichtung weist einen Bürstenbesatz auf, der aus einer Ni-Basis-Legierung besteht. Die Erfindung betrifft weiter eine zugehörige Turbomaschine, sowie ein Verfahren zur Herstellung einer Bürstendichtung.

## Beschreibung

Die Erfindung betrifft eine Bürstendichtung für eine Turbomaschine, eine zugehörige Turbomaschine, sowie ein Verfahren zur Herstellung der Bürstendichtung.

Aus dem Stand der Technik sind verschiedene Bürstendichtungen für thermische Turbomaschinen bekannt. Dabei gibt es eine Vielzahl von Anwendungsfällen, in welchen zwei relativ zueinander bewegliche Teile nicht-hermetisch gegeneinander abzudichten sind. Ein derartiger Anwendungsfall ist zum Beispiel die Abdichtung eines gasdurchströmten, ringförmigen Spalts zwischen einem Stator und einem Rotor einer Turbomaschine, insbesondere einer Fluggastrubine für ein Flugzeug. Zur nicht-hermetischen Abdichtung ringförmiger Zwischenräume zwischen relativ zueinander rotierenden Baugruppen werden dabei häufig Bürstendichtungen verwendet, da Bürstendichtungen bei gleicher Dichtwirkung leichter und kompakter sind als Labyrinthdichtungen.

Bürstendichtungen sind beispielsweise aus der EP 1 146 266 A2 oder der EP 2 857 721 A1 bekannt. Bürstendichtungen können im Wesentlichen einen Deckring, einen Stützring und ein Dichtelement umfassen. Das Dichtelement kann den Bürstenbesatz aufweisen, der aus einer Vielzahl an dünnen Drähten oder Fasern bestehen kann, die mit einem Kerndraht in einem Klemmrohr fixiert werden können. Anströmende Gase der Turbomaschine werden gezwungen, durch den Bürstenbesatz, auch als Bürstenpaket bezeichnet, hindurchzuströmen. Dabei presst das Gas die Drähte gegen den Stützring und bewirkt so eine Verdichtung des Bürstenbesatzes. So wird die Durchlässigkeit der Bürstendichtung auf ein Minimum reduziert. Aufgrund ihrer Elastizität können die Drähte oder Fasern des Bürstenbesatzes axiale und radiale Rotorbewegungen nahezu verschleißfrei ausgleichen und nehmen danach wieder ihre ursprüngliche Lage ein.

In Bürstendichtungen wird derzeit in der Regel ein Kobaltbasis-Werkstoff als Material für den Bürstenbesatz verwendet, der insbesondere unter dem Markennamen Haynes 25 bekannt ist. Dieses Material kann zwar bis zu 980 °C temperaturbeständig sein. Jedoch sind bisherige Kobaltbasis-Werkstoffe für einen Bürstenbesatz auf Maximal-Temperaturen zwischen 600 °C und 700 °C beschränkt, vor allem aufgrund der Kriech- und Relaxationseigenschaften. Insbesondere kann die Funktion der Bürstendichtung vom Federverhalten des Bürstenbesatzes abhängig sein. Eine zu schnelle Relaxation der Bürstendichtung durch die thermomechanische Belastung des Bürstenbesatzes kann beispielsweise zu einem Nachlassen des Federverhaltens, zu einer Vergrößerung des Dichtspaltes und somit zur Verschlechterung der Dichtwirkung führen. Dichtstellen mit Einsatztemperaturen oberhalb von 600 °C bzw. 700 °C können daher derzeit nicht mit Bürstendichtungen abgedeckt werden. Jedoch herrschen an vielen Dichtpositionen in einer modernen Turbomaschine Maximaltemperaturen über diesem Temperaturlimit.

Neben der hohen Temperaturbeständigkeit des Bürstenbesatzes sind weitere Eigenschaften des Bürstenbesatzes, insbesondere an das Material des Bürstenbesatzes für den Einsatz in modernen Turbomaschinen notwendig, insbesondere die bereits genannten Kriech- und Relaxationseigenschaften bei hohen Einsatztemperaturen, sowie Korrosionseigenschaften und der Wärmeeintragseigenschaften beim Anstreifen des Bürstenbesatzes an dem Rotor.

Der Erfindung liegt somit die Aufgabe zugrunde, eine Bürstendichtung für eine Turbomaschine bereitzustellen, die oberhalb einer Einsatztemperatur von 700 °C einer verbesserte Dichtwirkung aufweist.

Die Aufgabe wird durch die Gegenstände der unabhängigen Patentansprüche gelöst. Vorteilhafte Weiterbildungen der Erfindung sind durch die abhängigen Patentansprüche sowie durch die folgende Beschreibung beschrieben.

Durch einen ersten Aspekt der Erfindung ist eine Bürstendichtung für eine Turbomaschine bereitgestellt, die einen Bürstenbesatz aufweist, der aus einer Ni-Basis-Legierung besteht.

Mit anderen Worten ist der Bürstenbesatz aus einer Ni-Basis-Legierung bzw. aus einem Ni-Basis-Werkstoff gefertigt. Insbesondere kann es vorgesehen sein, dass eine Vielzahl von Drähten bzw. Borsten des Bürstenbesatzes, die zu dem Bürstenbesatz zusammengefasst werden, aus der Ni-Basis-Legierung bestehen. Die Vielzahl von Drähten können insbesondere um einen Kerndraht in einem Klemmrohr fixiert sein. Vorzugsweise umfasst die Bürstendichtung darüber hinaus einen Deckring und einen Stützring.

Ein Vorteil der Ni-Basis-Legierung für die Verwendung als Bürstenbesatz in einer Bürstendichtung, insbesondere für eine Turbomaschine, ist, dass dieser metallische Hochtemperaturwerkstoff einen Temperaturbereich für den Einsatz der Bürstendichtungen im Vergleich zu einem Kobaltbasis-Werkstoff deutlich erweitert, insbesondere weit über eine Einsatztemperatur von 700 °C, insbesondere bis zu einer Maximal-Temperatur von 750 ° C, vorzugsweise bis zu einer Maximal-Temperatur von 800 °C. Selbst in diesem erweiterten Temperaturbereich weist der Bürstenbesatz hervorragende Kriech- und Relaxationseigenschaften auf, sodass ein Federverhalten des Bürstenbesatzes beständig erhalten bleibt. Weiterhin stellt die Ni-Basis-Legierung für den Einsatz als Bürstenbesatz eine hohe Widerstandsfähigkeit gegen Korrosion bereit und induziert vergleichsweise einen geringen Wärmeeintrag in die Bürstendichtung durch die Reibung an dem Rotor.

Zu der Erfindung gehören auch Ausführungsformen von Ni-Basis-Legierungen, durch die sich zusätzliche Vorteile ergeben. Die Prozentangaben der einzelnen Elemente in den Ausführungsformen der Ni-Basis-Legierungen beziehen sich auf Masseprozente (Mass.-%).

Eine Ausführungsform sieht vor, dass die Ni-Basis-Legierung des Bürstenbesatzes folgende chemische Elemente enthält: 7 % bis 24 % Co, 15 % bis 24 % Cr, bis zu 11 % Mo, bis zu 5 % Al und bis zu 5 % Ti, wobei die restliche Legierung abgesehen von unvermeidlichen Verunreinigungen im Wesentlichen aus Ni besteht. Vorzugsweise kann ein Anteil der unvermeidlichen Verunreinigungen höchstens 0,5 % betragen. Insbesondere ist diese Ni-Basis-Legierung aushärtbar, sodass nach der Aushärtung die gewünschten Materialeigenschaften bereitgestellt werden können. In Tabelle 1 ist diese Ni-Basislegierung als Werkstoff Typ A bezeichnet.

Eine Ausführungsform sieht vor, dass die Ni-Basis-Legierung des Bürstenbesatzes folgende chemische Elemente enthält: 2 % bis 12 % Fe, 10 % bis 20 % Cr, bis zu 5 % Ti und bis zu 5 % Al, wobei die restliche Legierung abgesehen von unvermeidlichen Verunreinigungen im Wesentlichen aus Ni besteht. Vorzugsweise kann ein Anteil der unvermeidlichen Verunreinigungen höchstens 0,5 % betragen. Insbesondere ist diese Ni-Basis-Legierung aushärtbar, sodass nach der Aushärtung die gewünschten Materialeigenschaften bereitgestellt werden können. In Tabelle 1 ist diese Ni-Basislegierung als Werkstoff Typ B bezeichnet.

Eine Ausführungsform sieht vor, dass die Ni-Basis-Legierung des Bürstenbesatzes folgende chemische Elemente enthält: 7 % bis 16 % Co, 17 % bis 26 % Cr, 5 % bis 13 % Mo, bis zu 5 % Ti und bis zu 5 % Al, wobei die restliche Legierung abgesehen von unvermeidlichen Verunreinigungen im Wesentlichen aus Ni besteht. Vorzugsweise kann ein Anteil der unvermeidlichen Verunreinigungen höchstens 0,5 % betragen. Insbesondere kann es vorgesehen sein, dass diese Ni-Basis-Legierung nicht ausgehärtet werden muss, um die gewünschten Materialeigenschaften bereitzustellen. Vorzugsweise kann die Ni-Basis-Legierung im lösungsgeglühten Zustand verwendet werden. In Tabelle 2 ist diese Ni-Basislegierung als Werkstoff Typ C bezeichnet.

Eine Ausführungsform sieht vor, dass die Ni-Basis-Legierung des Bürstenbesatzes folgende chemische Elemente enthält: 5 % bis 14 % Fe, 21 % bis 29 % Cr, bis zu 5 % Al und bis zu 5 % Ti, wobei die restliche Legierung abgesehen von unvermeidlichen Verunreinigungen im Wesentlichen aus Ni besteht. Vorzugsweise kann ein Anteil der unvermeidlichen Verunreinigungen höchstens 0,5 % betragen. Insbesondere kann es vorgesehen sein, dass diese Ni-Basis-Legierung nicht ausgehärtet werden muss, um die gewünschten Materialeigenschaften bereitzustellen. Vorzugsweise kann die Ni-Basis-Legierung im lösungsgeglühten Zustand verwendet werden. In Tabelle 2 ist diese Ni-Basislegierung als Werkstoff Typ D bezeichnet.

Ein Vorteil der jeweiligen Ausführungsformen ist, dass dieser metallische Hochtemperaturwerkstoff einen Temperaturbereich für den Einsatz der Bürstendichtungen im Vergleich zu einem Kobaltbasis-Werkstoff deutlich erweitert, insbesondere weit über eine Einsatztemperatur von 700 °C, insbesondere bis zu einer Maximal-Temperatur von 750 ° C, vorzugsweise bis zu einer Maximal-Temperatur von 800 °C. Selbst in diesem erweiterten Temperaturbereich weist der Bürstenbesatz hervorragende Kriech- und Relaxationseigenschaften auf, sodass ein Federverhalten des Bürstenbesatzes beständig erhalten bleibt. Weiterhin stellt die Ni-Basis-Legierung für den Einsatz als Bürstenbesatz eine hohe Widerstandsfähigkeit gegen Korrosion bereit und induziert vergleichsweise einen geringen Wärmeeintrag in die Bürstendichtung durch die Reibung an dem Rotor.

Durch einen weiteren Aspekt der Erfindung ist eine Turbomaschine bereitgestellt, die zumindest eine erfindungsgemäße Bürstendichtung aufweist. Durch den Einsatz der erfindungsgemäßen Bürstendichtung in einer Turbomaschine kann durch die verbesserte Dichtwirkung ein Wirkungsgrad der Turbomaschine gesteigert werden. Darüber hinaus kann die Turbomaschine in den Bereichen, in denen die Bürstendichtungen eingesetzt werden, mit höheren Arbeitstemperaturen gearbeitet werden, sodass beispielsweise ein innerer Wirkungsgrad erhöht werden kann. Insbesondere kann somit vorteilhaft Treibstoff eingespart werden.

Eine Ausführungsform sieht vor, dass die Turbomaschine als Gasturbine ausgebildet ist, insbesondere als eine Fluggasturbine.

Eine Ausführungsform sieht vor, dass die Turbomaschine als Dampfturbine ausgebildet ist.

Eine Ausführungsform sieht vor, dass die Turbomaschine als Industrieverdichter ausgebildet ist.

Durch einen weiteren Aspekt der Erfindung ist ein Verfahren zur Herstellung einer erfindungsgemäßen Bürstendichtung bereitgestellt. Insbesondere kann ein Draht, bestehend aus der Ni-Basis-Legierung, bereitgestellt sein, wobei eine Vielzahl von Drähten zu dem Bürstenbesatz der Bürstendichtung zusammengesetzt wird.

Nicht aushärtbare Ni-Basis-Legierungen können den Vorteil haben, nach der Zusammensetzung zu der Bürstendichtung bereits die gewünschten Materialeigenschaften bereitstellen können, ohne durch eine Wärmebehandlung ausgehärtet werden zu müssen.

Durch einen weiteren Aspekt der Erfindung ist ein weiteres Verfahren zur Herstellung einer erfindungsgemäßen Bürstendichtung bereitgestellt, wobei der Bürstenbesatz der Bürstendichtung einer Wärmebehandlung zur Aushärtung der Ni-Basis-Legierung unterzogen wird. Insbesondere ist die für dieses Verfahren verwendete Ni-Basis-Legierung aushärtbar.

Vorzugsweise wird zunächst eine Vielzahl von Drähten zu dem Bürstenbesatz der Bürstendichtung zusammengesetzt. Anschließend wird die zusammengesetzte Bürstendichtung mittels Wärmebehandlung ausgehärtet. Unter der Aushärtung (auch Aushärten oder Ausscheidungshärtung) ist eine Wärmebehandlung zu verstehen, mit der die Härte und Festigkeit des Werkstoffs, insbesondere der Ni-Basis-Legierung, erhöht wird. Nach der Aushärtung erhält der Bürstenbesatz vorteilhaft seine gewünschten Materialeigenschaften wie Kriech- und Relaxationseigenschaften.

In der Tabelle 1 sind die aushärtbaren Ni-Basis-Legierungen zusammengefasst. Tabelle 2 fasst die Ni-Basis-Legierungen zusammen, die im lösungsgeglühten Zustand verwendet werden können und nicht ausgehärtet werden müssen. Die Angaben zu dem Anteil an Ni in Massenprozent stellt jeweils lediglich einen möglichen Bereich der restlichen Legierung dar.

**Tabelle 1: Zusammensetzungen der aushärtbaren Ni-Basis-Legierungen**

| | Werkstoff Typ A | Werkstoff Typ B |
|---|---|---|
| *Zusammensetzung in Massen-%* | | |
| Ni | 31-78 (Rest) | 58-88 (Rest) |
| Co | 7-24 | - |
| Fe | - | 2-12 |
| Cr | 15-24 | 10-20 |
| Mo | 0-11 | - |
| Al | 0-5 | 0-5 |
| Ti | 0-5 | 0-5 |

**Tabelle 2: Zusammensetzungen der im lösungsgeglühten Zustand verwendbaren Nickelbasis-Werkstoffe**

| | Werkstoff Typ C | Werkstoff Typ D |
|---|---|---|
| *Zusammensetzung in Massen-%* | | |
| Ni | 35-71 (Rest) | 47-74 (Rest) |
| Co | 7-16 | - |
| Fe | - | 5-14 |
| Cr | 17-26 | 21-29 |
| Mo | 5-13 | - |
| Al | 0-5 | 0-5 |
| Ti | 0-5 | 0-5 |

## Patentansprüche

1. Bürstendichtung für eine Turbomaschine, **gekennzeichnet durch** einen Bürstenbesatz, der aus einer Ni-Basis-Legierung besteht.

2. Bürstendichtung nach Anspruch 1, **dadurch gekennzeichnet, dass** die Ni-Basis-Legierung des Bürstenbesatzes folgende chemische Elemente enthält: 7 % bis 24 % Co, 15 % bis 24 % Cr, bis zu 11 % Mo, bis zu 5 % Al und bis zu 5 % Ti B, alle vorherigen Angaben in Mass.-%, wobei die restliche Legierung abgesehen von unvermeidlichen Verunreinigungen aus Ni besteht.

3. Bürstendichtung nach Anspruch 1, **dadurch gekennzeichnet, dass** die Ni-Basis-Legierung des Bürstenbesatzes folgende chemische Elemente enthält: 2 % bis 12 % Fe, 10 % bis 20 % Cr, bis zu 5 % Al und bis zu 5 % Ti, alle vorherigen Angaben in Mass.-%, wobei die restliche Legierung abgesehen von unvermeidlichen Verunreinigungen aus Ni besteht.

4. Bürstendichtung nach Anspruch 1, **dadurch gekennzeichnet, dass** die Ni-Basis-Legierung des Bürstenbesatzes folgende chemische Elemente enthält: 7 % bis 16 % Co, 17 % bis 26 % Cr, 5 % bis 13 % Mo, bis zu 5 % Ti und bis zu 5 % Al, alle vorherigen Angaben in Mass.-%, wobei die restliche Legierung abgesehen von unvermeidlichen Verunreinigungen aus Ni besteht.

5. Bürstendichtung nach Anspruch 1, **dadurch gekennzeichnet, dass** die Ni-Basis-Legierung des Bürstenbesatzes folgende chemische Elemente enthält: 5 % bis 14 % Fe, 21 % bis 29 % Cr, bis zu 5 % Al und bis zu 5 % Ti, alle vorherigen Angaben in Mass.-%, wobei die restliche Legierung abgesehen von unvermeidlichen Verunreinigungen aus Ni besteht.

6. Turbomaschine, aufweisend eine Bürstendichtung nach einem der vorherigen Ansprüche.

7. Turbomaschine nach Anspruch 6, **dadurch gekennzeichnet, dass** die Turbomaschine als Gasturbine, insbesondere als Fluggasturbine oder Industriegasturbine ausgebildet ist.

8. Turbomaschine nach Anspruch 6, **dadurch gekennzeichnet, dass** die Turbomaschine als Dampfturbine ausgebildet ist.

9. Verfahren zur Herstellung einer Bürstendichtung nach einem der Ansprüche 1 bis 5.

10. Verfahren zur Herstellung einer Bürstendichtung nach Anspruch 2 oder 3, wobei der Bürstenbesatz der Bürstendichtung einer Wärmebehandlung zur Aushärtung der Ni-Basis-Legierung unterzogen wird.
